Europäisches Patentamt

European Patent Office

Office européen des brevets

(19)

(11) **EP 0 714 019 B1**

(12) **FASCICULE DE BREVET EUROPEEN**

(45) Date de publication et mention
de la délivrance du brevet:
**22.09.1999 Bulletin 1999/38**

(51) Int Cl.$^6$: **G01M 3/24**

(21) Numéro de dépôt: **95420325.3**

(22) Date de dépôt: **22.11.1995**

(54) **Procédé et dispositif de détection et de localisation de fuites dans une conduite parcourue par un fluide**

Verfahren und Vorrichtung zur Aufspürung und Ortsbestimmung von Undichtigkeiten in einem von Flüssigkeit durchströmten Rohr

Procedure and device for the detection and localisation of leaks of fluid flowing in a pipe

(84) Etats contractants désignés:
**AT BE CH DE DK ES FR GB GR IE IT LI LU MC NL PT SE**

(30) Priorité: **22.11.1994 FR 9414241**

(43) Date de publication de la demande:
**29.05.1996 Bulletin 1996/22**

(73) Titulaire: **GAZ DE FRANCE (SERVICE NATIONAL9 75017 Paris (FR)**

(72) Inventeurs:
• **Permuy, Alfred**
**F-92500 Rueil Malmaison (FR)**
• **Chamant, Marc**
**F-69290 Saint Genis les Ollieres (FR)**

• **Millet, Joel**
**F-38390 Montalieu-Vercieu (FR)**

(74) Mandataire: **Thibault, Jean-Marc**
**Cabinet Beau de Loménie**
**51, Avenue Jean Jaurès**
**B.P. 7073**
**69301 Lyon Cédex 07 (FR)**

(56) Documents cités:
**DE-C- 3 607 913**

• **TECHNISCHES MESSEN, vol. 55, no. 7-8, 1988 MÜNCHEN, DE, pages 279-285, XP 000026937 H.SCHWARZE 'Rechnergestütztes Messsystem zur automatisierten Rohrnetzüberwachung und Lecksuche'**

## Description

La présente invention se rapporte à la détection et à la localisation de sources de bruit, telles que des fuites dans une conduite parcourue par un fluide.

L'invention concerne, plus particulièrement, une méthode de localisation d'une fuite en présence d'une autre source sonore mettant en oeuvre deux capteurs de vibrations ou d'ondes acoustiques montés, à distance l'un de l'autre, sur la canalisation.

L'invention trouve une application particulièrement avantageuse dans le domaine de la localisation de fuites dans des conduites de transport d'un fluide gazeux ou liquide.

Il est connu, dans l'état de la technique, de nombreuses méthodes pour localiser une fuite dans une conduite. Il est connu ainsi, par exemple, une méthode fondée sur la ressemblance entre deux signaux résultant du bruit de fuites et se propageant vers deux capteurs placés aux extrémités opposées du tronçon de conduite inspecté. A partir de la mesure de la différence du temps $t_d$ de propagation du bruit de fuite vers les deux capteurs, dès lors que la vitesse $V$ de propagation du bruit dans la conduite est déterminée, il est possible de déduire la distance $d$ de la fuite par rapport à l'un des capteurs selon la relation : $d = (D - V.t_d)/2$.

Pour déterminer la différence $t_d$ du temps de propagation du bruit de fuite vers les deux capteurs, il est procédé au calcul des fonctions d'intercorrélation $C_{XY}$ entre les signaux $X$ et $Y$ issus des deux capteurs. Lorsqu'une fonction d'intercorrélation $C_{XY}$ présente un maximum pour le retard $T_j$, il peut être affirmé qu'une fuite existe en un point de la conduite inspectée et cette fuite peut être localisée facilement à partir de la différence $t_d$ du temps de propagation du bruit de fuite qui correspond précisément au retard $T_j$.

Il s'avère que cette technique classique d'intercorrélation, reposant sur le traitement des retards de propagation entre les signaux, ne donne pas satisfaction en pratique. En effet, cette méthode, qui repose sur la prise en compte de l'aspect temporel lié aux signaux, présente l'inconvénient d'être particulièrement sensible, d'une part, aux bruits parasites survenant dans l'environnement des capteurs de mesure et, d'autre part, au mode de propagation du son dans la canalisation.

La présente invention vise donc à remédier aux inconvénients énoncés ci-dessus, en proposant une méthode permettant de détecter et de localiser des fuites dans une conduite, de façon précise et fiable et à un moindre coût.

Pour atteindre cet objectif, le procédé selon l'invention consiste :

- à disposer, sur la conduite, des premier et second capteurs de vibrations ou d'ondes acoustiques, séparés l'un de l'autre par une distance connue,
- à prélever les signaux électriques temporels délivrés respectivement par le premier et le second capteurs, le signal délivré par le premier capteur et, respectivement, délivré par le second capteur, étant la somme d'un signal émis par la première source de bruit avec un retard donné pour atteindre le premier capteur et, respectivement, un retard donné pour atteindre le second capteur, et d'un signal émis par une seconde source de bruit distante de la première source, avec un retard donné pour atteindre le premier capteur et, respectivement, un retard donné pour atteindre le second capteur,
- à déterminer un estimateur de la fonction d'intercorrélation entre les signaux émis par les première et seconde sources de bruit,
- et à rechercher le couple de valeurs de distances séparant l'un des capteurs et les première et seconde sources de bruit, de façon que l'estimateur de la fonction d'intercorrélation soit minimisé.

Un tel procédé, qui prend en compte aussi bien l'aspect énergétique que temporel des signaux, assure une localisation précise des fuites, même en présence de bruits parasites.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue schématique montrant le principe du procédé selon l'invention.

La **fig. 2** est un exemple de représentation de l'estimateur de la fonction d'intercorrélation permettant de visualiser la position des sources de bruit.

Les **fig. 3** et **4** illustrent la forme de l'estimateur de la fonction d'intercorrélation considéré pour les deux positions des sources de bruit.

La **fig. 5** est un schéma-bloc fonctionnel montrant un dispositif conçu pour mettre en oeuvre le procédé de détection et de localisation conforme à l'invention.

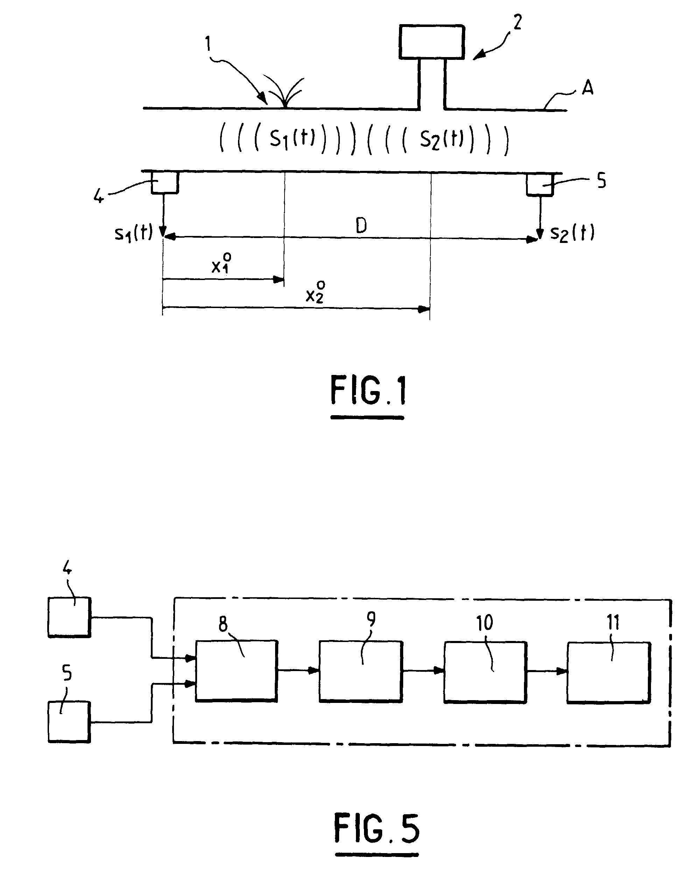

Tel que cela ressort plus précisément de la **fig. 1**, le procédé selon l'invention vise à détecter et à localiser une première source de bruit **1**, telle qu'une fuite, apparaissant sur une conduite ou une canalisation **A** de transport d'un fluide gazeux ou liquide. La technique selon l'invention consiste à localiser la fuite **1** en présence d'une seconde source sonore localisée **2**. Pour des raisons de simplification, la seconde source sonore sera constituée, la plupart du temps, par un détendeur de la conduite dont la position est connue. Bien entendu, une seconde fuite, différente de la première, peut constituer la seconde source sonore.

Le procédé consiste à disposer, sur la conduite **A**, des premier **4** et second **5** capteurs de vibrations ou d'ondes acoustiques, adaptés au fluide. Si le fluide est un liquide, les capteurs **4, 5** sont, de préférence, des capteurs de vibrations. En revanche, si le fluide est gazeux, les capteurs **4, 5** sont des capteurs de pression acoustique, tels que, par exemple, des microphones ou des hydrophones. Les capteurs **4** et **5** sont espacés l'un de l'autre d'une distance prédéterminée **D**, la plus réduite possible et telle que le signal de fuite ne soit pas à un niveau inférieur à la sensibilité de l'appareil de mesure.

Les sources de bruit **1, 2** émettent chacune, respectivement, un signal sonore $S_1(t)$, $S_2(t)$ évoluant au cours du temps. Le signal $s_1(t)$, mesuré par le premier capteur **4**, correspond à la somme, d'une part, d'un signal $S_1$ émis par la première source de bruit **1** avec un retard déterminé $\tau_{11}$, pour atteindre le premier capteur **4** et, d'autre part, un signal $S_2$ émis par la seconde source de bruit **2**, avec un retard déterminé $\tau_{21}$, pour atteindre le premier capteur **4**. De la même façon, le signal $s_2(t)$, mesuré par le second capteur **5**, est la somme de deux contributions sonores, à savoir un signal $S_1$ émis par la première source de bruit **1** avec un retard déterminé $\tau_{12}$ pour atteindre le second capteur **5** et d'un signal $S_2$ émis par la seconde source de bruit **2**, avec un retard déterminé $\tau_{22}$ pour atteindre le second capteur **5**.

En négligeant l'atténuation des ondes sonores se propageant le long de la conduite **A**, les signaux temporels $s_1(t)$ et $s_2(t)$, mesurés, respectivement, par les capteurs **4, 5**, peuvent être exprimés de la manière suivante :

$$[1] \quad \begin{cases} s_1(t) = S_1(t - \tau_{11}) + S_2(t - \tau_{21}) \\ s_2(t) = S_1(t - \tau_{12}) + S_2(t - \tau_{22}) \end{cases}$$

où $\tau_{ij}$ est le retard du signal émis par la source **i** (avec **i** = 1 à 2) pour atteindre le capteur **j** (avec **j** = 1 à 2).

Dans la mesure où les deux sources sonores **1** et **2** sont indépendantes l'une de l'autre, les signaux $S_1(t)$ et $S_2(t)$ sont indépendants. L'hypothèse de décorrélation des sources de bruit **1** et **2** conduit à considérer que la fonction d'intercorrélation $\Gamma_{S_1, S_2}$, entre les signaux $S_1$ et $S_2$ doit être nulle. Il convient donc de minimiser un estimateur de cette fonction d'intercorrélation qui dépend uniquement des distances $x_1$ et $x_2$ de chacune des sources de bruit **1, 2** par rapport à l'un des capteurs (par exemple le capteur **4** dans l'exemple illustré à la **fig. 1**). Les valeurs $x_1^0$ et $x_2^0$, qui minimisent cet estimateur d'intercorrélation, donnent alors les positions des deux sources **1** et **2** par rapport au premier capteur **4**.

La recherche du couple de valeur de distance $x_1^0$ et $x_2^0$ passe par un traitement numérique des signaux $s_1(t)$ et $s_2(t)$. En utilisant la transformation de Fourier, le système d'équation **[1]** devient :

$$[2] \quad \begin{cases} \hat{s}_1(\omega) = e^{-j\omega\tau_{11}} \cdot \hat{S}_1(\omega) + e^{-j\omega\tau_{21}} \hat{S}_2(\omega) \\ \hat{s}_2(\omega) = e^{-j\omega\tau_{12}} \cdot \hat{S}_1(\omega) + e^{-j\omega\tau_{22}} \hat{S}_2(\omega) \end{cases}$$

où $\omega$ est la pulsation et $\hat{s}(\omega)$ est la transformée de Fourier de **s(t)**. A partir du système d'équation **[2]**, il peut être déduit :

$$[3] \quad \begin{cases} \hat{S}_1(\omega) = \dfrac{\hat{s}_1(\omega) \cdot e^{-j\omega\tau_{22}} - \hat{s}_2(\omega) \cdot e^{-j\omega\tau_{21}}}{e^{-j\omega(\tau_{11} + \tau_{22})} - e^{-j\omega(\tau_{12} + \tau_{21})}} \\ \hat{S}_2(\omega) = \dfrac{\hat{s}_2(\omega) \cdot e^{-j\omega\tau_{11}} - \hat{s}_1(\omega) \cdot e^{-j\omega\tau_{12}}}{e^{-j\omega(\tau_{11} + \tau_{22})} - e^{-j\omega(\tau_{12} + \tau_{21})}} \end{cases}$$

où $\hat{S}(\omega)$ est la transformée de Fourier du signal **S(t)**.

Comme indiqué ci-dessus, l'hypothèse de décorrélation des sources sonores **1** et **2** conduit à une fonction d'intercorrélation des signaux $S_1$, $S_2$, tel que :

$$[4] \quad \Gamma_{S_1 S_2}(\tau) = 0$$

quelles que soient les valeurs de $\tau$.

Or, la fonction d'intercorrélation peut être exprimée de la manière suivante :

$$[5] \qquad \Gamma_{S_1 S_2}(\tau) = \int_{-\infty}^{+\infty} \hat{S}_1(\omega) \cdot \hat{S}_2^*(\omega) \cdot e^{+j\omega\tau} d\omega$$

En remplaçant $\hat{S}_1$ et $\hat{S}_2$, dans l'équation [5] il peut être obtenu :

$$[6] \qquad \Gamma_{S_1 S_2}(\tau) = \int_{-\infty}^{+\infty} \frac{N(\omega)}{|D(\omega)|^2} d\omega$$

avec :

$$N(\omega) = \left( -|\hat{s}_1(\omega)|^2 e^{j\omega(\tau_{12} - \tau_{22})} - |\hat{s}_2(\omega)|^2 e^{j\omega(\tau_{11} - \tau_{21})} \right.$$
$$[7] \qquad \left. + \hat{s}_1(\omega) \hat{s}_2^*(\omega) e^{j\omega(\tau_{11} - \tau_{22})} + \hat{s}_1^*(\omega) \hat{s}_2(\omega) e^{j\omega(\tau_{12} - \tau_{21})} \right) \cdot e^{j\omega\tau}$$

et :

$$[8] \qquad |D(\omega)|^2 = 4 \sin^2 \frac{\omega}{2} (\tau_{11} + \tau_{22} - \tau_{12} - \tau_{21})$$

Il doit donc être recherché le couple $x_1{}^0$, $x_2{}^0$ qui minimise la fonction d'intercorrélation $\Gamma_{S_1,S_2}(\tau)$ exprimée par la formule [6]. Il convient ainsi de donner une estimation de la fonction d'intercorrélation $\Gamma_{S_1,S_2}(\tau)$ pour déterminer ce couple de valeurs.

Une solution simplifiée, pour déterminer une estimation de la fonction d'intercorrélation $\Gamma_{S_1,S_2}(\tau)$ consiste à considérer uniquement l'optimisation du numérateur $N(\omega)$. A partir des équations [6] et [7], il peut être déduit que cet estimateur ayant pour but de déterminer le couple de valeurs $x_1{}^0$, $x_2{}^0$ s'exprime par la fonctionnelle dont l'expression est la suivante :

$$[9] \qquad -\Gamma_{S_1 S_1}(\tau + \tau_{12} - \tau_{22}) - \Gamma_{S_2 S_2}(\tau + \tau_{11} - \tau_{21}) + \Gamma_{S_1 S_2}(\tau + \tau_{11} - \tau_{22}) + \Gamma_{S_2 S_1}(\tau + \tau_{12} - \tau_{21})$$

Or, les retards des signaux ont l'expression suivante :

$$[10] \qquad \begin{cases} \tau_{11} = \dfrac{x_1}{C_0} \; ; \; \tau_{21} = \dfrac{x_2}{C_0} \\[2mm] \tau_{12} = \dfrac{D - x_1}{C_0} \; ; \; \tau_{22} = \dfrac{D - x_2}{C_0} \end{cases}$$

avec $C_0$ = vitesse du signal dans la canalisation.

La fonctionnelle à minimiser par rapport à $x_1$, $x_2$ est donc :

[11]

$$f_\tau(x_1, x_2) = \Gamma_{s_1 s_1}\left(\tau + \frac{x_2 - x_1}{C_0}\right) + \Gamma_{s_2 s_2}\left(\tau + \frac{x_1 - x_2}{C_0}\right)$$
$$- \Gamma_{s_1 s_2}\left(\tau + \frac{x_1 + x_2 - D}{C_0}\right) - \Gamma_{s_2 s_1}\left(\tau + \frac{D - x_1 - x_2}{C_0}\right)$$

Il convient donc de déterminer les signaux d'autocorrélation $\Gamma_{S1, S1}$, $\Gamma_{S2, S2}$ et les signaux d'intercorrélation $\Gamma_{S1, S2}$ et $\Gamma_{S2, S1}$. L'opération de minimisation consiste à choisir la valeur minimale de la norme choisie pour $f_\tau(x_1, x_2)$, c'est-à-dire, par exemple, la valeur maximale de la valeur absolue de $f_\tau(x_1, x_2)$ sur l'ensemble des retards $\tau$. Le calcul est effectué pour $N_1$ valeurs de la distance $x_1$ et $N_2$ valeurs de la distance $x_2$, telle que $0 \le x_1 \le D$ et $x_1 \le x_2 \le D$.

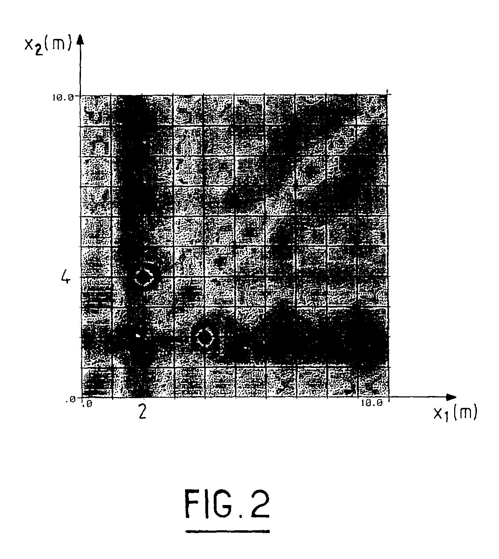

A titre d'exemple, il peut être prévu de présenter la fonctionnelle **f** (norme de $f_\tau$) sous la forme d'une image en niveau de gris, tel que cela apparaît à la **fig. 2**. Dans l'exemple illustré, il ressort que la distance $x_1^0$ de la fuite **1** par rapport au capteur **4** est égale à 2 mètres, tandis que la distance $x_2^0$ de la fuite **2** par rapport au capteur **4** est de 4 mètres.

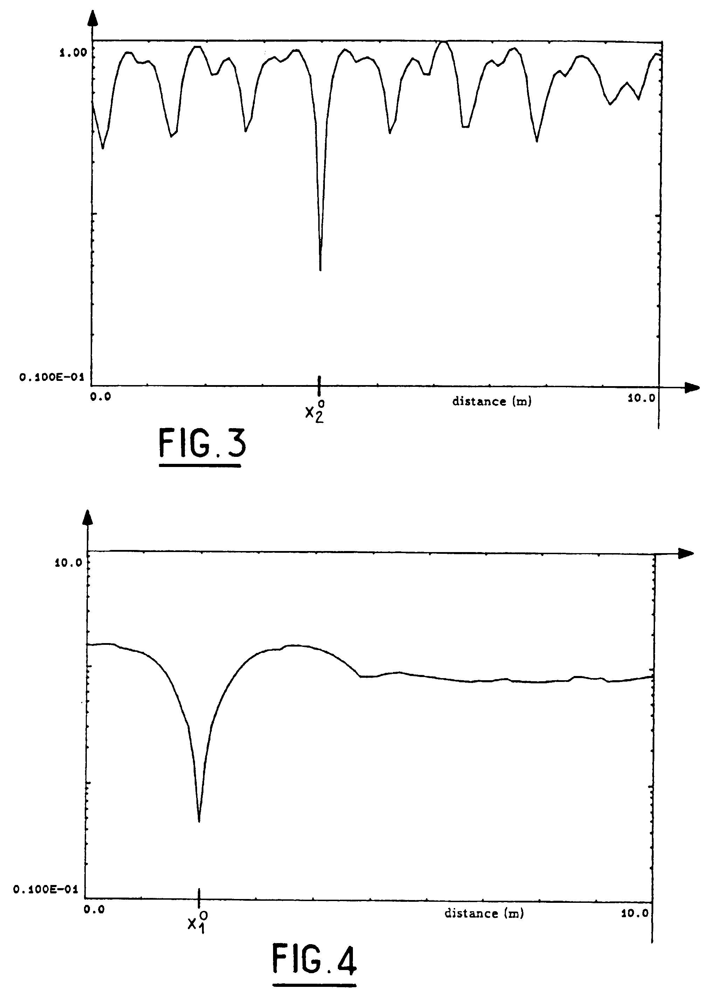

Une coupe de la fonctionnelle pour $x_1 = 2$ m (**fig. 3**), et respectivement pour $x_2 = 4$ m (**fig. 4**), permet de faire apparaître les distances $x_2^0$, $x_1^0$ des sources sonores par rapport au capteur **4**, à savoir respectivement 4 m et 2 m.

A titre d'exemple, la **fig. 5** illustre un schéma-bloc fonctionnel permettant la mise en oeuvre du procédé décrit ci-dessus. Les capteurs sonores **4, 5** sont connectés à une unité de traitement **7** des signaux $s_1(t)$, $s_2(t)$. L'unité **7** comprend, en entrée, un étage **8** d'amplification et de filtrage des signaux $s_1(t)$, $s_2(t)$. De préférence, les signaux sont filtrés par un filtre passe-bas ayant pour fréquence de coupure la première fréquence de coupure de la conduite. L'étage d'amplification et de filtrage **8** est connecté à un circuit **9** d'acquisition et de numérisation des signaux $s_1$, $s_2$, à une fréquence d'échantillonnage **Fe** au moins égale à deux fois la fréquence maximale contenue dans $s_1$ et $s_2$, cette fréquence pouvant être la fréquence de coupure précédente.

Le circuit d'acquisition **9** est relié à des moyens **10** de traitement numérique des signaux $s_1$, $s_2$ selon la méthode conforme à l'invention et fondée sur l'indépendance statistique de deux sources de bruit. Les moyens de traitement **10** sont reliés à des moyens **11** de représentation ou de visualisation de l'estimateur de la fonction d'intercorrélation, par exemple, sous la forme d'une image en niveau de gris.

L'invention n'est pas limitée aux exemples décrits et représentés, car diverses modifications peuvent y être apportées sans sortir de son cadre.

## Revendications

1. Procédé de détection et de localisation d'une première source de bruit (**1**), telle qu'une fuite dans une conduite (**A**) parcourue par un fluide,
   caractérisé en ce qu'il consiste :

   - à disposer, sur la conduite (**A**), des premier (**4**) et second (**5**) capteurs de vibrations ou d'ondes acoustiques, séparés l'un de l'autre par une distance connue (**D**),
   - à prélever les signaux électriques temporels $(s_1(t), s_2(t))$ délivrés respectivement par le premier et le second capteur, le signal $(s_1(t))$, délivré par le premier capteur, et, respectivement, $(s_2(t))$, délivré par le second capteur, étant la somme d'un signal (**S₁**) émis par la première source de bruit (**1**) avec un retard donné ($\tau_{11}$) pour atteindre le premier capteur (**4**) et, respectivement, un retard donné ($\tau_{12}$) pour atteindre le second capteur (**5**), et d'un signal (**S₂**) émis par une seconde source de bruit (**2**) distante de la première source, avec un retard donné ($\tau_{21}$) pour atteindre le premier capteur (**4**) et, respectivement, un retard donné ($\tau_{22}$) pour atteindre le second capteur (**5**),
   - à déterminer un estimateur de la fonction d'intercorrélation entre les signaux (**S₁, S₂**) émis par les première et seconde sources de bruit,
   - et à rechercher le couple de valeurs de distances $(x_1^0, x_2^0)$ séparant l'un des capteurs et les première et seconde sources de bruit, de façon que l'estimateur de la fonction d'intercorrélation soit minimisé.

2. Procédé selon la revendication 1, caractérisé en ce qu'il consiste :

   - à réaliser, pour déterminer un estimateur de la fonction d'intercorrélation, entre les signaux (**S₁, S₂**) émis par les première et seconde sources de bruit :

. une autocorrélation ($\Gamma_{\mathbf{S1, S1}}$, $\Gamma_{\mathbf{S2, S2}}$) pour chacun des signaux ($\mathbf{s_1(t)}$, $\mathbf{s_2(t)}$) délivrés par les premier et second capteurs,

. et une intercorrélation ($\Gamma_{\mathbf{S1, S2}}$, $\Gamma_{\mathbf{S2, S1}}$) entre les signaux ($\mathbf{s_1(t)}$, $\mathbf{s_2(t)}$) délivrés par les premier et second capteurs,

- et à rechercher le couple de valeurs de distances ($\mathbf{x_1^0}$, $\mathbf{x_2^0}$) séparant l'un des capteurs et les première et seconde sources de bruit, de façon à minimiser, quel que soit le retard ($\tau$), le signal représentatif de la fonctionnelle suivante :

$$f_\tau(x_1, x_2) = \Gamma_{s_1 s_1}\left(\tau + \frac{x_2 - x_1}{C_0}\right) + \Gamma_{s_2 s_2}\left(\tau + \frac{x_1 - x_2}{C_0}\right)$$
$$- \Gamma_{s_1 s_2}\left(\tau + \frac{x_1 + x_2 - D}{C_0}\right) - \Gamma_{s_2 s_1}\left(\tau + \frac{D - x_1 - x_2}{C_0}\right)$$

avec $\mathbf{C_0}$, la célérité des ondes acoustiques.

3. Procédé selon la revendication 2, caractérisé en ce qu'il consiste, à partir de la norme du signal représentatif de la fonctionnelle de retard, à déterminer un signal représentatif d'une fonctionnelle pour un couple $\mathbf{N_1}$, $\mathbf{N_2}$ de valeurs de distances ($\mathbf{x_1}$, $\mathbf{x_2}$), respectivement, séparant l'un des capteurs et les première et seconde sources de bruit avec $0 \leq \mathbf{x_1} \leq \mathbf{D}$ et $\mathbf{x_1} \leq \mathbf{x_2} \leq \mathbf{D}$.

4. Procédé selon la revendication 3, caractérisé en ce qu'il consiste à rechercher le minimum du signal représentatif de la fonctionnelle $\mathbf{f(x_1, x_2)}$, afin de déterminer le couple des valeurs de distances entre l'un des capteurs et les sources de bruit.

5. Dispositif de détection et de localisation de fuites dans une conduite ($\mathbf{A}$) parcourue par un fluide, comprenant des premier ($\mathbf{4}$) et second ($\mathbf{5}$) capteurs de vibrations ou d'ondes acoustiques, séparés l'un de l'autre d'une distance connue ($\mathbf{D}$), et une unité de traitement ($\mathbf{7}$) des signaux ($\mathbf{s_1(t)}$, $\mathbf{s_2(t)}$) délivrés par les capteurs,
caractérisé en ce que l'unité de traitement ($\mathbf{7}$) comporte :

- des moyens permettant de décomposer le signal ($\mathbf{s_1(t)}$) délivré par le premier capteur et, respectivement, le signal ($\mathbf{s_2(t)}$) délivré par le second capteur, d'une part, en un premier signal ($\mathbf{S_1}$) émis par une première source de bruit avec un retard déterminé ($\tau_{11}$) pour atteindre le premier capteur et, respectivement, un retard ($\tau_{12}$) pour atteindre le second capteur et, d'autre part, en un second signal ($\mathbf{S_2}$) émis par une seconde source de bruit distante de la première source, avec un retard déterminé ($\tau_{21}$) pour atteindre le premier capteur et, respectivement, un retard ($\tau_{22}$) pour atteindre le second capteur,
- des moyens de calcul adaptés pour déterminer un estimateur de la fonction d'intercorrélation entre les signaux ($\mathbf{S_1}$, $\mathbf{S_2}$) émis par les première et seconde sources de bruit,
- et des moyens de minimisation de l'estimateur de la fonction d'intercorrélation, de façon à déterminer un couple de valeurs de distance ($\mathbf{x_1^0}$, $\mathbf{x_2^0}$) séparant l'un des capteurs et les première et seconde sources de bruit.

6. Dispositif selon la revendication 5, caractérisé en ce que l'unité de traitement ($\mathbf{7}$) comporte des moyens ($\mathbf{11}$) de représentation du signal d'intercorrélation sous la forme d'une image en niveau de gris.

## Patentansprüche

1. Verfahren zur Erfassung und Ortung einer ersten Schallquelle (1), beispielsweise eine Leckage in einer von einem Fluid durchlaufenen Rohrleitung (A),
dadurch gekennzeichnet, daß das Verfahren darin besteht, daß sich an einer Rohrleitung (A) ein erster (4) und zweiter (5) Schwingungs- oder Schallsensor befindet, die beide mit einem bekannten Abstand (D) voneinander getrennt sind; daß temporäre elektrische Signale ($s_1(t), s_2(t)$) erfaßt werden, die jeweils vom ersten bzw. zweiten Sensor abgegeben werden, wobei das Signal ($s_1(t)$) vom ersten Sensor abgegeben wird und das Signal ($s_2(t)$) vom zweiten Sensor, und die die Summe bilden aus einem Signal ($S_1$), abgegeben von der ersten Schallquelle (1) mit einer bestimmten Verzögerungszeit ($\tau_{11}$) bis zum Erreichen des ersten Sensors (4) bzw. mit einer bestimm-

ten Verzögerungszeit ($\tau_{12}$) bis zum Erreichen des zweiten Sensors (5), und aus einem Signal ($S_2$), abgegeben von einer von der ersten Schallquelle entfernten zweiten Schallquelle (2) mit einer bestimmten Verzögerungszeit ($\tau_{21}$) bis zum Erreichen des ersten Sensors (4) bzw. mit einer bestimmten Verzögerungszeit ($\tau_{22}$) bis zum Erreichen des zweiten Sensors (5); daß ein Schätzwert für die Interkorrelationsfunktion zwischen den Signalen ($S_1, S_2$) bestimmt wird, die von der ersten und zweiten Schallquelle abgegeben werden; und daß das Wertepaar für die Abstände ($x_1{}^0, x_2{}^0$) ermittelt wird, die zwischen einem der Sensoren und der ersten und zweiten Schallquelle liegen, so daß der Schätzwert für die Interkorrelationsfunktion minimiert wird.

2. Verfahren nach Anspruch 1,
dadurch gekennzeichnet, daß das Verfahren darin besteht, daß zur Bestimmung eines Schätzwertes für die Interkorrelationsfunktion zwischen den von der ersten und zweiten Schallquelle abgegebenen Signalen ($S_1, S_2$) für jedes der vom ersten und zweiten Sensor abgegebenen Signale ($s_1(t)s_2(t)$) eine Autokorrelation ($\Gamma_{S1,S1}, \Gamma_{S2,S2}$) sowie eine Interkorrelation ($\Gamma_{S1,S2}, \Gamma_{S2,S1}$) zwischen den von der ersten und zweiten Schallquelle abgegebenen Signalen ($s_1(t), s_2(t)$) hergestellt wird, und das Wertepaar für die Abstände ($x_1{}^0, x_2{}^0$) ermittelt wird, die zwischen einem der Sensoren und der ersten und zweiten Schallquelle liegen, so daß das für die folgende Funktionsgleichung repräsentative Signal ungeachtet der Verzögerungszeit ($\tau$) minimiert wird:

$$f\tau(x_1, x_2) = \Gamma_{S1S1}\left(\tau + \frac{x_2 - x_1}{C_0}\right) + \Gamma_{S2S2}\left(\tau + \frac{x_1 - x_2}{C_0}\right)$$
$$-\Gamma_{S1S2}\left(\tau + \frac{x_1 + x_2 - D}{C_0}\right) - \Gamma_{S2S1}\left(\tau + \frac{D - x_1 - x_2}{C_0}\right)$$

$C_0$ steht hier für die Ausbreitungsgeschwindigkeit der Schallwellen.

3. Verfahren nach Anspruch 2,
dadurch gekennzeichnet, daß das Verfahren darin besteht, anhand des Typs des für die Verzögerungsfunktionsgleichung repräsentativen Signals jeweils ein für die Verzögerungsfunktionsgleichung repräsentatives Signal bei einem Wertepaar $N_1, N_2$ für die Abstände ($x_1, x_2$) zu bestimmen, die einen der Sensoren von der ersten und zweiten Schallquelle mit $0 \leq x_1 \leq D$ und $x_1 \leq x_2 \leq D$ trennen.

4. Verfahren nach Anspruch 3,
dadurch gekennzeichnet, daß das Verfahren darin besteht, den kleinsten Wert des für die Funktion $f(x_1, x_2)$ repräsentativen Signals zu ermitteln, um das Wertepaar für die Abstände zwischen einem der Sensoren und den Schallquellen zu bestimmen.

5. Vorrichtung zur Erfassung und Ortung von Leckagen an einer von einem Fluid durchlaufenen Rohrleitung (A) bestehend aus einem ersten (4) und zweiten (5) Schwingungs- oder Schallsensor, beide mit einem bekannten Abstand (D) voneinander getrennt, und aus einer Einheit zur Verarbeitung (7) der von den Sensoren abgegebenen Signalen ($s_1(t), s_2(t)$),
dadurch gekennzeichnet, daß die Verarbeitungseinheit (7) folgende Mittel umfaßt:

- Mittel, mit denen das vom ersten Sensor abgegebene Signal ($s_1(t)$) bzw. das vom zweiten Sensor abgegebene Signal ($s_2(t)$) zum einen in ein erstes Signal ($S_1$) aufgelöst werden kann, das von einer ersten Schallquelle mit einer bestimmten Verzögerungszeit ($\tau_{11}$) bis zum Erreichen des ersten Sensors bzw. mit einer Verzögerungszeit ($\tau_{12}$) bis zum Erreichen des zweiten Sensors abgegeben wird, und zum anderen in ein zweites Signal ($S_2$), das von einer zweiten Schallquelle, die von der ersten entfernt ist, mit einer bestimmten Verzögerungszeit ($\tau_{21}$) bis zum Erreichen des ersten Sensors bzw. mit einer Verzögerungszeit ($\tau_{22}$) bis zum Erreichen des zweiten Sensors abgegeben wird;
- geeignete Berechnungsmittel zur Bestimmung eines Schätzwertes für die Interkorrelationsfunktion zwischen den von der ersten und zweiten Schallquelle abgegebenen Signalen ($S_1, S_2$);
- und Mittel zur Minimierung des Schätzwertes für die Interkorrelationsfunktion, so daß das Wertepaar für die Abstände ($x_1{}^0, x_2{}^0$) bestimmt werden kann, die zwischen einem der Sensoren und der ersten und zweiten Schallquelle liegen.

6. Vorrichtung nach Anspruch 5,

dadurch gekennzeichnet, daß die Verarbeitungseinheit (7) Mittel (11) zur Darstellung des Interkorrelationssignals in Form eines Bildes in Graustufen umfaßt.

## Claims

1. A method of detecting and locating a first source of noise (1) such as a leak from a pipe (A) carrying a fluid; the method being characterized in that it consists in:

   - placing first and second vibration or sound wave sensors (4, 5) on the pipe (A), the sensors being spaced apart from each other by a known distance (D);
   - taking first and second electrical signals as a function of time ($s_1(t)$, $s_2(t)$) as delivered respectively by the first and second sensors, the signal ($s_1(t)$) delivered by the first sensor and the signal ($s_2(t)$) delivered by the second sensor being the sum of a signal ($S_1$) emitted by the first noise source (1) with a given delay ($\tau_{11}$) to reach the first sensor (4) and with a given delay ($\tau_{12}$) to reach the second sensor (5), plus a signal ($S_2$) emitted by a second noise source (2) remote from the first source, with a given delay ($\tau_{21}$) to reach the first sensor (4) and a given delay ($\tau_{22}$) to reach the second sensor (5);
   - in determining an estimator for the cross-correlation function between the signals ($S_1$, $S_2$) emitted by the first and second noise sources; and
   - in searching for the pair of distance values ($x_1{}^0$, $x_2{}^0$) separating one of the sensors from the first and second noise sources so that the cross-correlation function estimator is minimized.

2. A method according to claim 1, characterized in that it consists:

   - in order to determine an estimator of the cross-correlation function between the signals ($S_1$, $S_2$) emitted by the first and second noise sources, in performing:

     - self-correlation ($\Gamma_{S1,S1}$, $\Gamma_{S2,S2}$) for each of the signals ($s_1(t)$, $s_2(t)$) delivered by the first and second sensors; and
     - cross-correlation ($\Gamma_{S1,S2}$, $\Gamma_{S2,S1}$) between the signals ($s_1(t)$, $s_2(t)$) delivered by the first and second sensors; and

   - in seeking the pair of distance values ($x_1{}^0$, $x_2{}^0$) separating one of the sensors and the first and second noise sources in such a manner as to minimize, whatever the delay ($\tau$), the signal representing the following functional:

$$f_\tau(x_1, x_2) = \Gamma_{S1,S1}\left(\tau + \frac{x_2 - x_1}{C_0}\right) + \Gamma_{S2,S2}\left(\tau + \frac{x_1 - x_2}{C_0}\right)$$

$$- \Gamma_{S1,S2}\left(\tau + \frac{x_1 + x_2 - D}{C_0}\right) - \Gamma_{S2,S1}\left(\tau + \frac{D - x_1 - x_2}{C_0}\right)$$

   where $C_0$ is the propagation velocity of the sound waves.

3. A method according to claim 2, characterized in that, starting from the norm of the signal representing the delay functional, it consists in determining a signal representative of a functional for the pair $N_1$, $N_2$ of distance values ($x_1$, $x_2$) between one of the sensors and the first and second noise sources, with $0 \leq x_1 \leq D$ and $x_1 \leq x_2 \leq D$.

4. A method according to claim 3, characterized in that it consists in seeking the minimum of the signal representative of the functional $f(x_1, x_2)$ so as to determine the pair of distance values between one of the sensors and the noise sources.

5. Apparatus for detecting and locating leaks from a pipe (A) carrying a fluid, the apparatus comprising first and second vibration or sound wave sensors (4, 5), separated from each other by a known distance (D), and a processor unit (7) for processing the signals ($s_1(t)$, $s_2(t)$) delivered by the sensors,

the apparatus being characterized in that the processor unit (7) comprises:

. means enabling the signal ($s_1(t)$) delivered by the first sensor and the signal ($s_2(t)$) delivered by the second sensor to be resolved into a first signal ($S_1$) emitted by a first noise source with a determined delay ($\tau_{11}$) to reach the first sensor and a delay ($\tau_{12}$) to reach the second sensor, and a second signal ($S_2$) emitted by a second noise source remote from the first source, with a determined delay ($\tau_{21}$) to reach the first sensor, and a delay ($\tau_{22}$) to reach the second sensor;

. calculation means adapted to determine an estimate of the cross-correlation function between the signals ($S_1$, $S_2$) emitted by the first and second noise sources; and

. means for minimizing the estimator of the cross-correlation function so as to determine a pair of distance values ($x_1^0$, $x_2^0$) separating one of the sensors from the first and second noise sources.

6. Apparatus according to claim 5, characterized in that the processor unit (7) includes means (11) for representing the cross-correlation signal in the form of a gray level image.

FIG.1

FIG.5

FIG.2

1.00

0.100E-01

0.0 $X_2^0$ distance (m) 10.0

## FIG.3

10.0

0.100E-01

0.0 $X_1^0$ distance (m) 10.0

## FIG.4